# EUROPÄISCHE PATENTSCHRIFT

(11) **EP 1 741 993 B1**
(45) Veröffentlichungstag und Bekanntmachung des Hinweises auf die Patenterteilung: **18.11.2015**
(21) Anmeldenummer: 06115423.3
(22) Anmeldetag: 14.06.2006
(51) Int. Cl.: F24F 13/20, B60H 1/00

(54) **Gehäuse einer Klimaanlage**
Housing of air conditioner
Boîtier d'un dispositif de climatisation

(30) Priorität: 09.07.2005 DE 102005032251
(43) Veröffentlichungstag der Anmeldung: 10.01.2007
(73) Patentinhaber: Deere & Company, Moline, IL 61265-8098 (US)
(72) Erfinder: Dietrich, Gunnar, 68199, Mannheim (DE)
(74) Vertreter: Holst, Sönke

(56) Entgegenhaltungen:
- DE-U1- 9 106 594
- FR-A3- 2 800 149
- JP-A- 60 044 737
- JP-A- 2000 088 279
- JP-A- 2001 304 780
- US-A- 3 703 087

## Beschreibung

Die Erfindung betrifft ein Fahrzeug mit einer mit CO₂ als Kältemittel betriebenen Klimaanlage, die ein Gehäuse umfasst, in dem Komponenten der Klimaanlage angebracht sind und das Wände umfasst, welche das Gehäuse mechanisch abstützen, haltern und stabilisieren.

### Stand der Technik

In Klimaanlagen in Fahrzeugen wird als Kältemittel derzeit in der Regel R134a verwendet. Im Betrieb können, je nach Anlage und Umgebungstemperatur bis etwa 20 bar Kältemitteldruck auftreten. Momentan steht die Entwicklung bzw. Weiterentwicklung von Klimaanlagen im Blickpunkt des Interesses, die mit CO₂ als Kältemittel betrieben werden, da CO₂ eines der umweltfreundlichsten Kältemittel darstellt. Beim Einsatz von CO₂ als Kältemittel ist jedoch zu berücksichtigen, dass dieses eine deutlich höhere Dichte als R134a aufweist und ein entsprechender Verdichter wie auch weitere Komponenten der Klimaanlage für deutlich höhere Drücke als ein Verdichter zur Verwendung mit R134a ausgelegt werden müssen, die bis zu etwa 130 bar betragen können. Würde bei einer derartigen, mit CO₂ betriebenen Klimaanlage eine Leckage mit abplatzenden Teilen auftreten, z. B. bei einer fehlerhaften Verlötung, so wäre ein derzeit für Klimaanlagen verwendetes Gehäuse aus Kunststoff hinsichtlich des Insassenschutzes nicht unbedingt ausreichend.

In der als gattungsbildend angesehenen DE 20 2004 007 708 U wird ein an die höheren Drücke angepasster Verdichter beschrieben, die bei einer mit CO₂ betriebenen Klimaanlage auftreten. Der Verdichter weist einen verstärkten Zylinderblock auf. Allerdings sind, wie oben erwähnt, auch weitere Komponenten der Klimaanlage mit erhöhten Drücken zu betreiben, so dass die Verstärkung des Verdichters allein nicht ausreicht.

Die DE 36 31 975 A schlägt einen Trocknerbehälter für eine Klimaanlage vor, dessen Gehäuse sich aus einem inneren, dünnwandigen Stützkörper und einer auf den Stützkörper außen stoffschlüssig aufgebrachten Wickelbeschichtung aus Glasfasern und einem Kleber besteht. Dadurch soll eine Gewichtsersparnis gegenüber Trocknerbehältern aus Stahl erzielt werden. Hier wird wiederum nur der Trocknerbehälter druckfest ausgestaltet, nicht hingegen die Zuführleitungen und andere Komponenten einer Klimaanlage.

Die DE 91 06 594 U beschreibt ein quaderförmiges Gehäuse eingangs genannter Art für Lüftungs- und Klimageräte mit Wandelementen, die einstückig aus mit Fasern (vorzugsweise Glasfasern) verstärktem Kunststoff hergestellt sind, dessen Deckenelement nach oben gewölbte Randstreifen hat, mit dem die Seitenwände verschraubt werden. Dadurch soll ein verwindungssteifes und korrosionsfestes Gehäuse entstehen. Hier sind die Wandelemente und die Verstärkungsfasern einstückig verarbeitet, was sich als recht aufwändig und kostspielig erweist.

In der JP 60 044 737 A wird eine Klimaanlage beschrieben, deren Bodenplatte aus einer Polypropylenbasis besteht, auf die Fiberglasmatten und Polypropylenmatten aufgelegt und aufgeheizt und gepresst werden.

### Aufgabe der Erfindung

Die der Erfindung zu Grunde liegende Aufgabe wird darin gesehen, ein einfach und preiswert herstellbares Gehäuse für eine Klimaanlage bereitzustellen, das auch bei einem Betrieb mit CO₂ eine hinreichende Sicherheit für die Insassen eines Fahrzeugs gewährleistet.

Diese Aufgabe wird erfindungsgemäß durch die Lehre des Patentanspruchs 1 gelöst.

Es wird vorgeschlagen, die Wände der gesamten Innenfläche des Gehäuses mit Ausnahme von Öffnungen innenseitig mit dem Verstärkungsgewebe auszukleiden, das aus hochfesten Fasern, z. B. Kevlar, besteht. Es sind demnach eine innere Schicht mit dem Verstärkungsgewebe, das einen hinreichenden Schutz bei Explosionen der Klimaanlage bereitstellt, und eine äußere Schicht aus Kunststoff oder Metall vorhanden, die das Gehäuse und die Klimaanlage mechanisch abstützt, haltert und stabilisiert. An der Innen- und Außenseite des Verstärkungsgewebes ist eine Aluminiumfolie angeordnet.

Auf diese Weise erhält man ein einfach und preiswert herstellbares Gehäuse für eine Klimaanlage, das sich für den Betrieb mit CO₂ als Kältemittel eignet. Das Verstärkungsgewebe stellt außerdem bei hinreichender Dicke im Zusammenwirken mit den Aluminiumfolien eine thermische Isolation für die Klimaanlage bereit.

Das Verstärkungsgewebe kann durch Klettband oder beliebige andere Mittel, z. B. Klebstoff, Druckknöpfe, Schrauben, Nieten etc. an den Wänden befestigt werden.

### Ausführungsbeispiel

In den Zeichnungen ist ein nachfolgend näher beschriebenes Ausführungsbeispiel der Erfindung dargestellt. Es zeigt:
- Fig. 1: eine teilgeschnittene Seitenansicht eines Gehäuses und der darin angeordneten Komponenten einer Klimaanlage, und
- Fig. 2: eine Schnittansicht der Seitenwand des Gehäuses.

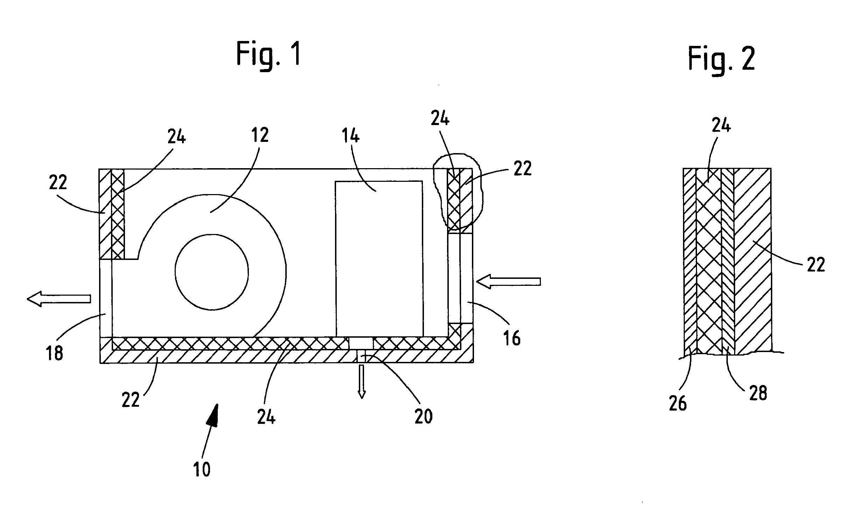

Die Figur 1 zeigt eine Seitenansicht eines Gehäuses 10, in dem Komponenten einer Klimaanlage angebracht sind, wie ein Lüfter 12 und ein Verdichter 14. Die Klimaanlage ist an sich bekannt und bedarf daher keiner näheren Erläuterung. Das Gehäuse 10 umfasst eine als Lufteinlass dienende Öffnung 16, eine als Luftauslass dienende Öffnung 18 und eine bodenseitige Öffnung 20 zum Austritt von Kondenswasser.

Das Gehäuse 10 umfasst plattenförmige Wände 22, die aus Kunststoff oder Metall, z. B. Stahl oder Aluminium, bestehen. An der Innenseite der Wände 22 ist ein Verstärkungsgewebe 24 aus hochfesten Kunststofffasern, wie Kevlar, angeordnet. Die gesamte Innenfläche des Gehäuses 10, mit Ausnahme der Öffnungen 16, 18, 20 ist mit dem Verstärkungsgewebe 24 ausgekleidet.

Wie anhand der Figur 2 erkennbar ist, befindet sich an der Innenseite des Verstärkungsgewebes 24 eine Aluminiumfolie 26. Eine weitere Aluminiumfolie 28 befindet sich zwischen dem Verstärkungsgewebe 24 und der Wand 22.

Das Gehäuse 10 ist in der Herstellung wenig aufwändig. Wird die Klimaanlage mit CO₂ als Kältemittel betrieben, stellt das Verstärkungsgewebe einen hinreichenden Insassenschutz gegen eventuell explodierende Komponenten der Klimaanlage bereit. Außerdem isoliert sie im Zusammenwirken mit den Aluminiumfolien 26, 28 die im Gehäuse 10 angeordneten Komponenten der Klimaanlage thermisch. Es wäre auch denkbar, eine weitere Schicht mit einem Verstärkungsgewebe an der Außenseite des Gehäuses 10 anzubringen.

## Patentansprüche

1. Fahrzeug mit einer mit CO₂ als Kältemittel betriebenen Klimaanlage, die ein Gehäuse (10) umfasst, in dem Komponenten der Klimaanlage angebracht sind und das Wände (22) aus Kunststoff oder Metall umfasst, welche das Gehäuse (10) mechanisch abstützen, haltern und stabilisieren, wobei die Wände (22) innenseitig mit einem Verstärkungsgewebe (24) aus Kunststofffasern ausgekleidet sind, die gesamte Innenfläche des Gehäuses (10) mit Ausnahme von Öffnungen (16, 18, 20) mit dem Verstärkungsgewebe (24) ausgekleidet ist, das Verstärkungsgewebe (24) aus hochfesten Fasern besteht, die einen Schutz gegen eventuell explodierende Komponenten der Klimaanlage bereitstellen, und das Verstärkungsgewebe (24) die im Gehäuse (10) angeordneten Komponenten der Klimaanlage im Zusammenwirken mit auf der Innenseite und auf der Außenseite des Verstärkungsgewebes (24) angeordneten Aluminiumfolien (26, 28) thermisch isoliert.

2. Fahrzeug nach Anspruch 1, wobei im Gehäuse (10) zumindest ein Lüfter (12) und ein Verdichter (14) angeordnet sind.

## Claims

1. Vehicle having an air-conditioning system which is operated with CO₂ as refrigerant and which comprises a housing (10) in which components of the air-conditioning system are mounted and which comprises walls (22) composed of plastic or metal, which walls mechanically support, hold and stabilize the housing (10), wherein the walls (22) are lined, on the inner side, with a reinforcement fabric (24) composed of plastics fibres, the entire inner surface of the housing (10) with the exception of openings (16, 18, 20) is lined with the reinforcement fabric (24), the reinforcement fabric (24) is composed of high-strength fibres which provide protection against any exploding components of the air-conditioning system, and the reinforcement fabric (24), in interaction with aluminium foils (26, 28) arranged on the inner side and on the outer side of the reinforcement fabric (24), thermally insulates the components of the air-conditioning system that are arranged in the housing (10).

2. Vehicle according to Claim 1, wherein at least one blower (12) and one compressor (14) are arranged in the housing (10).

## Revendications

1. Véhicule doté d'une installation de climatisation alimentée en CO₂ comme agent de refroidissement et présentant un boîtier (10) dans lequel des composants de l'installation de climatisation sont placés et comprenant des parois (22) en matière synthétique ou en métal qui soutiennent mécaniquement le boîtier (10), le maintiennent et le stabilisent,
les parois (22) étant habillées du côté intérieur d'un tissu de renfort (24) en fibres synthétiques,
la totalité de la surface intérieure du boîtier (10), à l'exception d'ouvertures (16, 18, 20), étant habillée du tissu de renfort (24),
le tissu de renfort (24) étant constitué de fibres à haute résistance qui assurent une protection contre des composants éventuellement explosifs de l'installation de climatisation,
le tissu de renfort (24) isolant thermiquement les composants de l'installation de climatisation installés dans le boîtier (10) en coopération avec des feuilles d'aluminium (26, 28) disposées sur le côté intérieur et sur le côté extérieur du tissu de renfort (24).

2. Véhicule selon la revendication 1, dans lequel au moins un ventilateur (12) et un compresseur (14) sont disposés dans le boîtier (10).
